# EUROPEAN PATENT SPECIFICATION

(11) **EP 1 212 235 B1**
(45) Date of publication and mention of the grant of the patent: **27.10.2004**
(21) Application number: 99934411.2
(22) Date of filing: 30.07.1999
(51) Int. Cl.: B62K 15/00

(54) **FOLDING BICYCLE FRAME**
FALTBARER FAHRRADRAHMEN
CADRE DE BICYCLETTE PLIANT

(43) Date of publication of application: 12.06.2002
(73) Proprietor: Pacific 21 Pty. Ltd., Perth, W.A. 6005 (AU)
(72) Inventor: HERDER, Jaime, Perth, W.A. 6000 (AU)
(74) Representative: Wilson Gunn M'Caw
(86) International application number: PCT/AU1999/000613
(87) International publication number: WO 2001/008965

(56) References cited:
- DE-A- 2 651 305
- GB-A- 2 021 055
- US-A- 4 460 191

## Description

### FIELD OF THE INVENTION

This invention relates to bicycles and more specifically to pedal bicycles that are termed collapsible or foldable.

### BACKGROUND

Bicycles were developed many decades ago and have adopted various forms since then. In recent decades, high density living and traffic congestion has produced a need for a collapsible bicycle. Such bicycle in a collapsed state occupies a small space to facilitate fitting it into cars, lifts and other confined spaces. Examples of such bicycles are shown in GB-A-2021055 or in DE-A-2651305.

There have been numerous different forms of collapsible bicycles which are characterised by small wheels having a diameter of about 40-50 cms. The designs that have been previously developed are typically either hinged about a vertical axis in a mid region of a frame or they comprise numerous detachable and folding components. The shortcoming of these previous designs is that they are either; not very compact, offer an uncomfortable riding configuration, or take a long time to transform from the collapsed to expanded form.

The object of this invention is to provide a collapsible bicycle that can be readily collapsed or expanded without any disassembly and without the application of any tools. Furthermore the bicycle must be sufficiently robust to support the rider while traversing terrain typically encountered by commuters in cities and suburbs. These objects are achieved by a folding bicycle frame according to claim 1. Preferred embodiments are defined in the dependent claims.

### SUMMARY OF THE INVENTION

Broadly, a folding bicycle frame is suggested having members connected to a steering head and rear wheel stays, the relative position between the steering head and rear wheel stays being controlled directly or indirectly by a collar slidable along a seat post through members connected at pivotal joints having horizontal axes.

According to claim 1 the invention resides in a folding bicycle frame having a seat post with upper and lower, front and rear struts pivotable about a lower portion of the seat post, the front ends of the front struts being pivotally attached to a steering-head bracket, the lower rear strut or struts accepting a rear wheel and a substantially vertical frame member pivotally interconnecting the upper rear strut to the lower rear strut or struts, a collar positionable along an upper portion of the seat post has front and rear connecting linkages that pivotally interconnect between the seat collar and the upper front and rear struts, so that sliding the collar along the seat tube changes the angle of the front and rear struts between open and folded states, and locking said seat collar at its lowermost or uppermost position fixes the frame in an open or folded state.

The invention also includes a bicycle that includes a folding frame as summarised above.

Preferably the forward struts are substantially parallel.

Preferably linkages engage the front and back upper struts at a distance of about 30 cms from the seat post ends of the struts.

Preferably the lower rear struts are plates pivoted about a crank hub and extend a short distance forward of the crank hub where between the lower front strut is pivotally attached.

Preferably a lever operated cam is used to tighten the collar over the seat post to enable firm positioning of the collar and quick release and tightening of the collar.

Preferably the upper rear extending strut is integral with a carrier frame.

In an alternative form a pin passes through both the collar and seat tube to locate it in the open and closed positions.

Preferably the pivot joints include ball bearings.

The invention can be better understood when a preferred embodiment is described in detail, with reference to the accompanying illustrations in which:
Fig 1 is a side view of the bicycle frame in the open state.
Fig 2 is a side view of the bicycle in an intermediate state between fully open and fully folded.
Fig 3 is a side schematic of the bicycle in the folded state.
Fig 4 is an exploded view of the collar and pivot bearing arrangement.

### DESCRIPTION OF PREFERRED EMBODIMENT

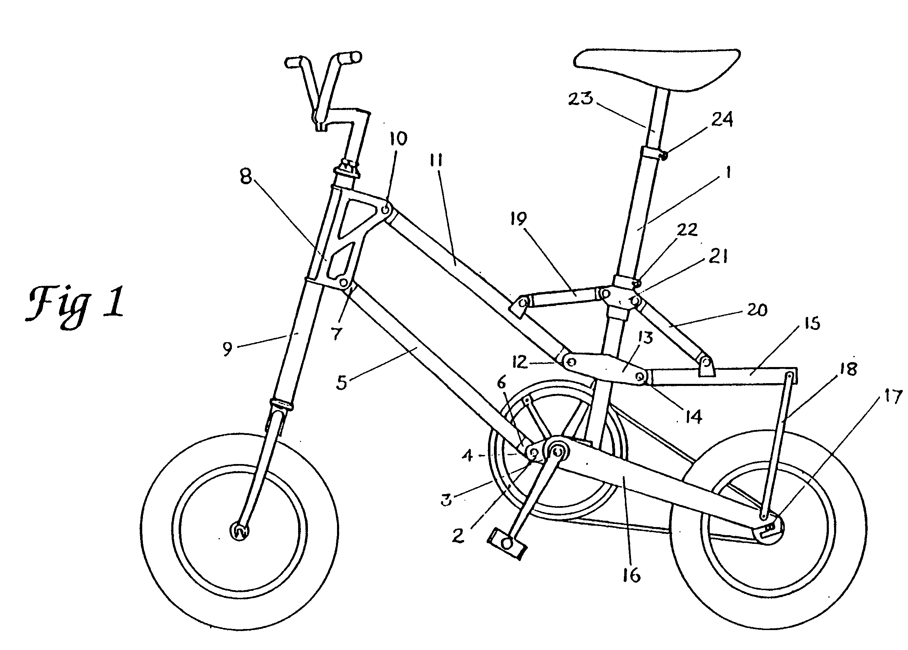

Referring to Fig 1, a tubular seat post 1 has at its lower end a forward protrusion 2 comprising two plates welded to the seat post. The plates are welded to a crank axle housing 3, and at their foremost end a pivot assembly 4 captures a lower front strut 5. Preferably this strut is an alloy tube the ends of which have inserts 6 and 7 which are described in more detail later. The front end of the lower strut is pivotally captured by a head bracket 8 comprised of two plates welded to opposing sides of a steering tube 9. An upper part of the head bracket includes an upper pivot 10 from which pivots an upper front tube 11. The lower end of the upper tube is pivotally captured at the front end 12 of a pair of mid-plates 13 which are welded to opposing sides of the seat tube 1. The rear of the mid-plates has a pivot 14 from which an upper rear arm 15 pivots.

A pair of rear extending lower arms 16 pivot about the crank housing 3. These arms can be fashioned from flat plate. At the rear end of the arm, a rear wheel hub 17 is secured in a manner common with most bicycles. Near the rear wheel fixing point, a vertical yoke 18 pivotally connects thereto, being pivotally attached to the upper rear arm 15.

To control the angles of the upper front strut and upper rear arm, linkages 19 and 20 are pivotally attached to the mid-region of the strut and arm. The linkages are connected to a collar 21 which is slidable along the seat post 1. The collar includes a fastening means 22 for securing the position of the collar and thus the position of all the abovementioned struts and arms which indirectly depend from the collar via the linkages 19 and 20.

The seat post 1 includes a telescoping inner tube 23 that is adjustable in height and secured by a fastening clamp 24.

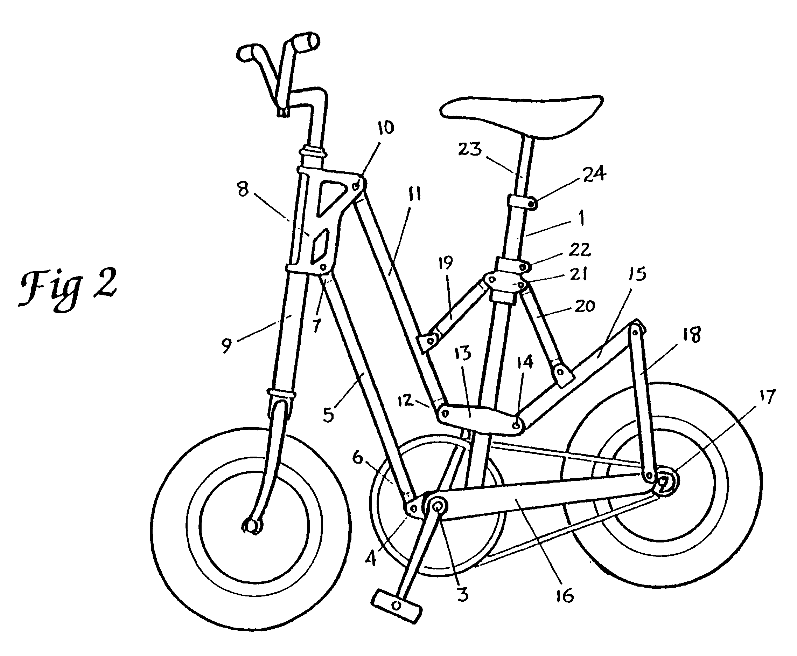

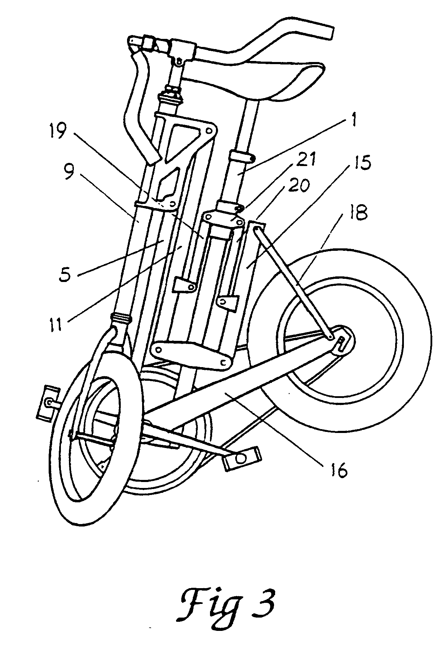

By releasing the collar clamp 22 and sliding the collar up the seat post, which can be achieved by pressing the seat post downwards, the frame assumes a partially folded state which is illustrated in Fig 2. Referring to the figure, collar 21 is positioned half way up the seat post and has raised the forward and rear struts and arms. All the relevant numbered structural members can be identified by referring to the description for Fig 1. Similarly Fig 3, shows the bicycle frame in a fully folded state with the identified components corresponding to those described for Fig 1. It will be clear from the folded geometry that dimensions of all components and their configuration is critical in order to achieve a compact arrangement. The figures provide a reasonable example of a geometry that functions, but obviously there are variations from the dispositions shown that will also provide for a compact folding bicycle.

Preferably the geometry of the axle pivots is configured so as to produce an overcentre arrangement. With such configuration, the frame is relaxed in both the fully folded and fully unfolded position, whereas resistance is experienced during the transition stages.

The struts and arms mentioned can be fashioned from alloy tube having a diameter of about 30-40 mm. Alternatively U sections may be found advantageous, which with appropriate choice of width can allow nesting of the struts and arms when the frame is in the collapsed state. Another variation, would be to have one or more of the struts represented by open frames with interconnecting members. Yet another variation would be to have plastic injection moulded struts made from polypropylene, for example. For lightweight, carbon fibre resins can be employed to advantage.

Strength can be added to weak regions by adding ribs or increasing thicknesses of the components at the weak spot. For example if it was found that the upper struts tended to suffer from fatigue in the region where the connecting linkages 19 and 20 meet the struts, then the side flanges which capture the linkages can be broadened to extend along the struts and welded thereto.

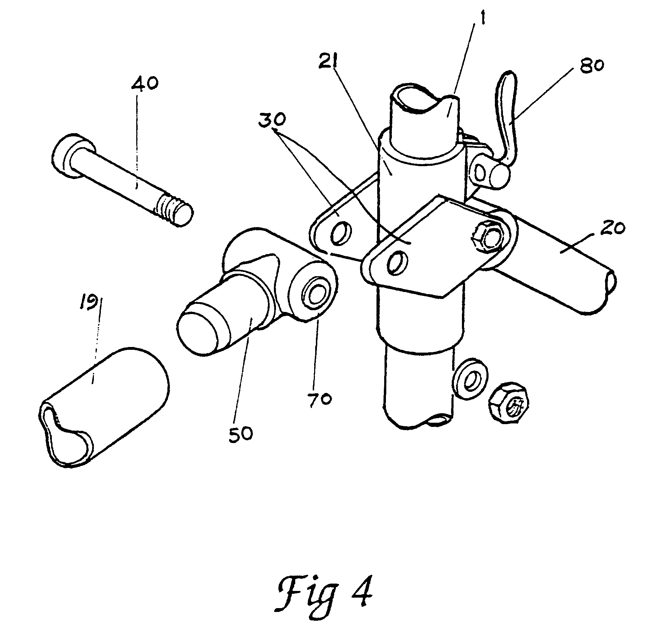

Fig 4 illustrates the slidable collar 21, the strut and pivot arrangement in more detail. Referring to the figure, collar 21 surrounds the seat post 1. Flange plates 30 extend from the collar and an axle bolt 40 passes through the flanges and the strut head insert 50. The head insert is made from a plastics or other material such as cast aluminium, and is glued, pinned or brazed to the strut body 19. Preferably a sleeve 70 is freely located into the strut head, this sleeve bearing against the inner faces of the flanges thereby preventing over tightening of the axle bolt. In order to reduce the friction of the joint, a ball-bearing assembly on either side of the sleeve can be incorporated. The upper end of the collar is split and a lever operated cam 80 serves to constrict or expand the collar 21. Such tighteners are commonly found on quick-release components of bicycles.

In order for the frame to be rigid when it is fully deployed, it is important that all the pivot joints are snug fits that do not allow any lateral movement. Broad contact surfaces are desirable to reduce any lateral movement.

The seat post 1 preferably has an extension which can be released or tightened by another lever operated cam, allowing adjustment of the seat height.

Some of the components that are not part of the invention have been omitted from the figures and description. These include brake and gear assemblies, and accessories such as a bag carrier which can be integrated with the upper rear arm. Some components that do not form part of the invention have been omitted from the description. These components include; pedals, handlebars, seats, chains and wheels.

It will be clear from the above description and accompanying drawings that by merely sliding the seat-post collar 21 up and down it is possible to fold and unfold the bicycle frame in a similar action to an umbrella. This embodiment enjoys numerous advantages and benefits over the prior art. Particularly, as no components are disconnected, the time taken to fold or unfold the bicycle is less than 10 seconds.

## Claims

1. A folding bicycle frame having a seat post (1) with upper and lower, front (11,5) and rear (15,16) struts pivotable about a lower portion of the seat post (1), the front ends (7,10) of the front struts (11,5) being pivotally attached to a steering-head bracket (8), the lower rear strut (16) or struts accepting a rear wheel and a substantially vertical frame member (18) pivotally interconnecting the upper rear strut (15) to the lower rear strut (16) or struts, a collar (21) positionable along an upper portion of the seat post (1) has front and rear connecting linkages (19,20) that pivotally interconnect between the seat collar (21) and the upper front and rear struts (11,15), so that sliding the collar (21) along the seat tube (1) changes the angle of the front (11,5) and rear (15,16) struts between open and folded states, and locking said seat collar (21) at its lowermost or uppermost position fixes the frame in an open or folded state respectively.

2. A folding bicycle frame as in claim 1 wherein the forward struts are substantially parallel.

3. A folding bicycle frame as in claims 1 or 2 wherein one or more of the struts are tubular and incorporate end inserts.

4. A folding bicycle frame as in claim 1 wherein the collar is tightened using a lever operated cam.

5. A folding bicycle frame as in claim 1 wherein the rear upper strut is substantially horizontal when the frame is in the open state.

6. A folding bicycle frame according to claim 3 wherein the end inserts are formed by moulding or casting a suitable molten or liquid like substance.

7. A folding bicycle frame according to claim 1 wherein one or more of the pivot joints comprise plates sandwiched outside the respective struts and a bolt passes through both the plates and a hole or bearing in the strut.

8. A bicycle which includes a folding frame as claimed in any one of claims 1 to 7.

## Patentansprüche

1. Faltbarer Fahrradrahmen mit einer Sattelstütze (1) mit oberen und unteren, vorderen (11,5) und hinteren (15,16) Streben, die um einen unteren Bereich der Sattelstütze (1) schwenkbar sind, wobei die Vorderenden (7,10) der Vorderstreben (11,5) schwenkbar an der Vorderradgabel (8) angebracht sind, die untere hintere Strebe (16) oder Streben ein Hinterrad aufnehmen, und ein im Wesentliches senkrechtes Rahmenteil (18), welches die obere hintere Strebe (15) mit der unteren hinteren Strebe (16) oder Streben schwenkbar verbindet, wobei ein entlang eines oberen Bereichs der Sattelstütze (1) positionierbarer Stellring (21) vordere und hintere Verbindungsgestänge (19,20) aufweist, welche den Sattelstellring (21) mit den oberen vorderen und hinteren Streben (11,15) schwenkbar verbinden, sodass ein Verschieben des Stellringes (21) entlang des Sattelrohres (1) den Winkel der vorderen (11,5) und hinteren Streben (15,16) zwischen offenem und gefaltetem Zustand ändert, wobei das Verriegeln des Stellrings (21) in seiner untersten oder obersten Position den Rahmen in einem offenen bzw. gefalteten Zustand fixiert.

2. Faltbarer Fahrradrahmen nach Anspruch 1, wobei die vorderen Streben im Wesentlichen parallel sind.

3. Faltbarer Fahrradrahmen nach Anspruch 1 oder 2, wobei eine oder mehrere Streben rohrförmig sind und Endeinsätze inkorporieren.

4. Faltbarer Fahrradrahmen nach Anspruch 1, wobei der Stellring unter Verwendung einer hebelbetriebenen Nocke festgestellt wird.

5. Faltbarer Fahrradrahmen nach Anspruch 1, wobei die hintere obere Strebe im offenen Zustand des Rahmens im Wesentlichen waagerecht ist.

6. Faltbarer Fahrradrahmen nach Anspruch 3, wobei die Endeinsätze durch Formen oder Gießen einer geeigneten geschmolzenen oder flüssigkeitsähnlichen Substanz geformt werden.

7. Faltbarer Fahrradrahmen nach Anspruch 1, wobei eines oder mehrere der Schwenkgelenke außerhalb der entsprechenden Streben eingelegte Scheiben und einen Bolzen, der durch beide Scheiben hindurchreicht, und ein Loch oder Lager in der Strebe umfassen.

8. Fahrrad, welches einen faltbaren Fahrradrahmen nach einem der Ansprüche 1 bis 7 umfasst.

## Revendications

1. Cadre de bicyclette pliant ayant un montant de selle (1) et des barres supérieures et inférieures avant (11, 5) et arrière (15, 16) s'articulant sur une partie inférieure du montant de selle (1), les extrémités avant (7, 10) des barres avant (11, 5) étant jointes de manière articulée à un support de tête de direction (8), la barre arrière inférieure (16) ou les barres arrière inférieures recevant une roue arrière, et un élément de cadre sensiblement vertical (18) reliant de manière articulée la barre arrière supérieure (15) à la barre arrière inférieure (16) ou aux barres arrière inférieures, un collier (21) pouvant être positionné le long d'une partie supérieure du montant de selle (1) ayant des tringles avant et arrière (19, 20) qui assurent une liaison articulée entre le collier de selle (21) et les barres supérieures avant et arrière (11, 15) de façon que le coulissement du collier (21) le long du tube de selle (1) change l'angle des barres avant (11, 5) et arrière (15, 16) entre un état déplié et un état plié, et le blocage du collier de selle (21) en position inférieure ou en position supérieure fixant le cadre respectivement dans un état déplié ou un état plié.

2. Cadre de bicyclette pliant selon la revendication 1, dans lequel les barres avant sont sensiblement parallèles.

3. Cadre de bicyclette pliant selon l'une des revendications 1 et 2, dans lequel une ou plusieurs des barres sont tubulaires et comportent des éléments rapportés d'extrémité.

4. Cadre de bicyclette pliant selon la revendication 1, dans lequel le collier se serre au moyen d'une came commandée par levier.

5. Cadre de bicyclette pliant selon la revendication 1, dans lequel la barre arrière supérieure est sensiblement horizontale lorsque le cadre est déplié.

6. Cadre de bicyclette pliant selon la revendication 3, dans lequel les éléments rapportés d'extrémité sont formés par moulage ou coulée d'une substance fondue ou fluide appropriée.

7. Cadre de bicyclette pliant selon la revendication 1, dans lequel une ou plusieurs des articulations comprennent des plaques intercalées à l'extérieur des barres respectives et un axe traverse les deux plaques et un trou ou palier de la barre.

8. Bicyclette comportant un cadre pliant selon l'une quelconque des revendications 1 à 7.
